# EUROPEAN PATENT APPLICATION

(11) **EP 1 770 149 A2**
(43) Date of publication of application: **04.04.2007**
(21) Application number: 06121370.8
(22) Date of filing: 27.09.2006
(51) Int. Cl.: C10J 3/00, C10B 53/02, F02C 3/28, F02C 6/18

(54) **Method for electric power generation from biomass and a plant for carrying out said method**

(30) Priority: 30.09.2005 IT BO20050591
(71) Applicant: G.I. & E. S.p.A., 60027 Osimo AN (IT)
(72) Inventor: GHERGO, LUCIANO, 60027, OSIMO (ANCONA) (IT)
(74) Representative: Dall'Olio, Giancarlo

(57) **Abstract**

Method for electric power generation from biomass used as a combustible material includes the following steps repeatedly performed:
• drying a given quantity of biomass;
• converting the dried biomass, without wastes, into a gaseous mixture that can be used as fuel;
• feeding of the gaseous mixture, as fuel, into gas turbo groups (3) operating electric generators (4);
• using at least a part of heat produced by the gas turbo groups (3) for assisting drying of the quantity of biomass.

## Description

The present invention relates to systems for electric power generation from renewable sources, such as in particular the biomass.

The kinds of biomass typically used for energetic purposes are e.g. swaths and pruning residues, organic mud, purification mud, virgin or treated wood, straw, rice husks, grape-seed flour, olive residue, paper mill mud, animal flour, wastes fuel, solid urban wastes.

Over the years, the exploitation of this type of resource, has been not only distributed on a local basis, but also limited due to low conversion efficiency, as far as small entity consumers are concerned, and due to stock difficulties as far as large entity consumers are concerned.

The object of the present invention is to propose a method for electric power generation from biomass, used as combustible material, and a plant for carrying out the method, the method including:
use of the biomass as a crude material;
a series of chemical processes aimed at transforming the biomass into a mixture of fuel gases; and
use of the fuel gases for supplying gas turbo groups, which operate electric power generators.

In this sense, the object is obtained also by the recycling a part of the heat produced by the group for co-generative aims, for example by sending the heat flow into the reactors, in which the biomass conversion processes take place.

Another object of the present invention is to propose a method for electric power generation from biomass used as combustible material, whose concept is new and which construction is simple and essential, and whose implementation is cheap with respect to the results to be obtained.

A further object of the present invention is to propose a plant for electric power generation from biomass used as combustible material, which is strong, efficient and has an essential structure, and which ensures a desired reliability standard and low costs with respect to the results to be obtained.

The above mentioned objects have been obtained in accordance with the contents of the claims.

The characteristic features of the invention, not resulting from what has been just said, will be better pointed out later, in accordance with the claims and with reference to the accompanying drawings in which:

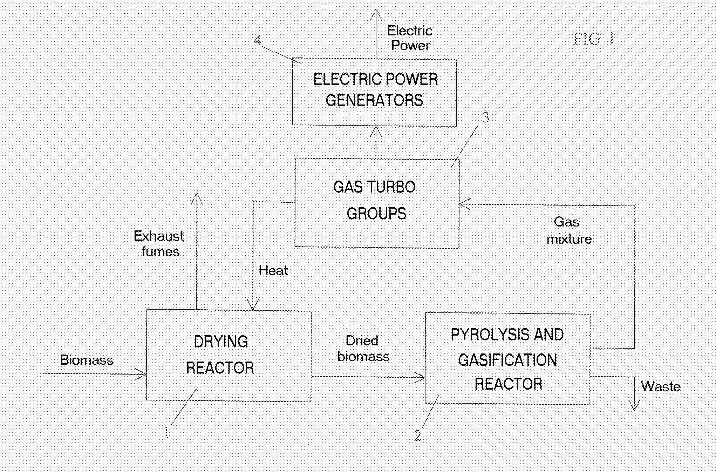

- Figure 1, shows a functional block diagram of the plant proposed by the present invention.

With reference to Figure 1, the numeral reference 1 indicates a reactor for drying a given quantity of biomass in a unit of time (for example, one hour): for example, a reactor of this kind can receive at its inlet an hourly quantity of raw biomass (so-called biomass "as it is") of 650-800 kg and then it outputs an hourly quantity of 400-500 kg at its outlet.

The drying reactor 1 operation requires a certain quantity of heat, supplied by gas turbo groups 3, described later on, and obviously produces exhaust fumes.

Another reactor 2, in cascade with respect to the drying reactor 1, is designed for pyrolysis and gasification of the so dried biomass, and its task is to transform the dried biomass in solid state, without wastes, into a gaseous mixture, that can be used as fuel.

One or more gas turbo groups 3 are situated in cascade with respect to the pyrolysis and gasification reactor 2, to receive the mixture as supply fuel.

The gas turbo groups 3, in turn, operate generators 4 for production of electric power, e.g. three-phase 400kVA.

The heat present in the exhaust fumes of the gas turbo groups 3 is re-cycled, entirely or in part, for the cogeneration.

In particular, the heat flow (see Figure 1) is advantageously used to assist the chemical processes inside the drying reactor 1; consequently, the plant proposed by the invention does not require any additional supply of heat.

The method for electric power generation from biomass used as combustible material, with the just described plant being its application example, includes the following features, repeatedly performed:
- drying of a given quantity of biomass;
- converting the dried biomass, without wastes, into a gaseous mixture that can be used as a fuel;
- feeding the gaseous mixture, as a fuel, into a certain number of gas turbo groups 3 operating the electric power generators 4;
- using at least a part of heat produced by the gas turbo groups 3 to assist the biomass drying operations.

As already specified, the heat produced by the gas turbo groups 3 and used for the biomass drying operations is more than sufficient for the correct execution of the latter, therefore no additional heat source is required.

The advantage of the present invention lies in the fact that a method has been conceived for electric power generation from biomass used as a combustible material, and a plant has been set up for carrying it out, which method allows a raw biomass (biomass "as it is") to be converted into a mixture of fuel gases aimed at feeding gas turbo groups 3, to generate electric power.

Another advantageous technical-functional aspect connected to the just said one is the re-cycle of the heat produced by the above groups for co-generative aim, in particular for the heat support of the drying reactor 1.

In this sense, the re-cycle of the heat produced by the combustion makes the proposed plant self-sufficient as to the necessary heat, without the need of any additional source of heat.

The indubitable advantages resulting from the cogeneration are clearly realized in a series of intrinsically interconnected effects, such as a considerable economic and energetic saving (no additional heat energy generation units and no additional fuel for feeding them are required), a lower environment pollution and a higher conversion efficiency.

A further advantage of the invention lies in the fact that a method and a plant have been conceived, in which the pyrolysis and gasification processes allow a considerable flexibility in the definition and control of the energy exploitation, increasing the number of types of usable fuel with respect to the solutions including only pyrolysis or gasification.

Therefore, the great variety of biomass crude materials that can be used, reduce the supply problems during the plant whole working life.

Another advantage of the invention lies in the fact that a method has been conceived for electric power generation from biomass used as a combustible material, which method is essential and simple, and whose implementation, as already pointed out, is cheap with respect to the obtained results.

A still further advantage of the invention lies in the fact that a plant has been conceived for electric power generation from biomass used as a combustible material, which plant is strong, efficient and has an essential structure, and which ensures a prefixed reliability standard and low costs with respect to the obtained results.

## Claims

1. Method for electric power generation from biomass used as a combustible material, such as swaths and pruning residues, organic mud, purification mud, virgin or treated wood, straw, rice husks, grape-seed flour, olive residue, paper mill mud, animal flour, wastes fuel, solid urban wastes, **characterized in that** it includes the following steps repeatedly performed:
• drying of a given quantity of biomass;
• conversion of the dried biomass, without wastes, into a gaseous mixture that can be used as a fuel;
• feeding of said gaseous mixture, as fuel, into at least one gas turbo group operating an electric power generator;
• using of at least a part of heat produced by said gas turbo group at least for assisting biomass drying operations.

2. Method, according to claim 1, **characterized in that** the dried biomass is converted into a gaseous mixture, usable as a fuel, by pyrolysis and/or gasification.

3. Method, according to claim 1, **characterized in that** the dried biomass is converted into a gaseous mixture, usable as a fuel, by pyrolysis.

4. Method, according to claim 1, **characterized in that** the dried biomass is converted into a gaseous mixture, usable as a fuel, by gasification.

5. Method, according to claim 1, **characterized in that** all the quantity of heat needed for drying said quantity of biomass is equal to the part of heat produced by said gas turbo group during its operation.

6. Plant for electric power generation from biomass used as a combustible material, such as swaths and pruning residues, organic mud, purification mud, virgin or treated wood, straw, rice husks, grape-seed flour, olive residue, paper mill mud, animal flour, wastes fuel, solid urban wastes, **characterized in that** it includes:
a first reactor for drying a given quantity of biomass per unit of time:
a second reactor for transforming, in above mentioned unit of time, the so dried biomass output at the outlet of said first reactor and without considering wastes, into a gaseous mixture, that can be used as a fuel;
at least one gas turbo group supplied by said mixture of fuel gases, fed by said second reactor, in said unit of time, with at least a part of heat produced by said group assisting the drying process inside the first reactor.

7. Plant, according to claim 6, **characterized in that** said second reactor is designed for pyrolysis and/or gasification of said quantity of biomass dried in said unit of time.

8. Plant, according to claim 6, **characterized in that** said second reactor is designed for pyrolysis of said quantity of biomass dried in said unit of time.

9. Plant, according to claim 6, **characterized in that** said second reactor is designed for gasification of said quantity of biomass dried in said unit of time.

10. Plant, according to claim 6, **characterized in that** said gas turbo group generates electric power.

11. Plant, according to claim 6, **characterized in that** said first reactor for drying said given quantity of biomass in said unit of time is fed only by said part of heat produced by said gas turbo group.
